# EUROPEAN PATENT SPECIFICATION

(11) **EP 0 603 136 B1**
(45) Date of publication and mention of the grant of the patent: **02.08.1995**
(21) Application number: 93830165.2
(22) Date of filing: 20.04.1993
(51) Int. Cl.: B60N 2/48

(54) **Headrest frame for motor-vehicle seats**
Kopfstützerahmen für Kraftfahrzeugsitze
Armature d'appui-tête pour sièges de véhicules automobiles

(30) Priority: 21.10.1992 IT TO920845
(43) Date of publication of application: 22.06.1994
(73) Proprietor: GESTIND-M.B." MANIFATTURA DI BRUZOLO" S.P.A, I-10050 Bruzolo (Torino) (IT)
(72) Inventor: De Filippo, Emilio, I-10050 Bruzolo (IT)
(74) Representative: Buzzi, Franco

(56) References cited:
- EP-A- 0 265 962
- EP-A- 0 322 374
- DE-A- 3 045 391
- DE-A- 3 323 229
- DE-U- 9 011 486
- FR-A- 2 606 860
- US-A- 4 671 573

## Description

The present invention is related in general to headrests for motor-vehicle seats, and is more particularly concerned with a headrest frame comprising a substantially quadrangular annular body, made in one piece of moulded plastic material, having a base and two tubular lateral uprights adapted to receive therein two support rods of the headrest.

A headrest frame of the above-mentioned type is generally known from European Patent Application EP 92830444.3 (EP-A-0 582 765) in the name of the same Applicant, contemplating an articulated connection between the top portions of the two tubular uprights and the upper ends of the two support rods, so as to allow oscillation of the headrest relative to the latter, and wherein the height adjustment of the headrest is performed by means of displacement of the support rods relative to the seat backrest.

It is also known, in headrests manufactured by the Applicant, to make the two tubular uprights with a substantially circular cross section having a diameter slightly greater than that of the support rods, which are slidably mounted within the said tubular uprights in order to allow vertical displacement of the frame for the height adjustment of the headrest. In such a case each tubular upright is associated to a respective elastic stop member for the adjustable positioning of the frame relative to the support rods.

Owing to the necessary play between the inner wall of the two tubular uprights and the outer surface of the support rods, this solution may involve in use vibrations of the headrest and, therefore, noise.

The object of the present invention is to overcome the above drawbacks, and this object is achieved by virtue of a headrest frame of the type known for example from DE-U-9 011 486.6 and set forth in the preamble of claim 1, the primary feature of which is defined in the characterizing part of claim 1.

Thanks to this solution, in the assembled condition of the support rods relative to the headrest frame an efficient frictional contact action of the frame relative to the support rods is obtained in a simple and functional way, without the need of separate auxiliar elements, thus preventing vibrations of the headrest and noise deriving therefrom.

Preferably the said at least one integral resilient projection is formed by a substantially arcuate bridge element extending parallel to the axial direction of the tubular upright across an opening of the wall thereof.

According to a preferred embodiment of the invention, each tubular upright has a pair of the said integral resilient projections, angularly offset from each other of about 90° and placed on symmetrically opposed sides relative to a longitudinal key groove formed along the inner wall of the tubular upright.

The longitudinal key groove is adapted to slidably cooperate with a corresponding key appendage radially protruding from the support rod, so as to suppress also any angular play.

The invention will be now disclosed in detail with reference to the accompanying drawings, purely provided by way of non limiting example, wherein:

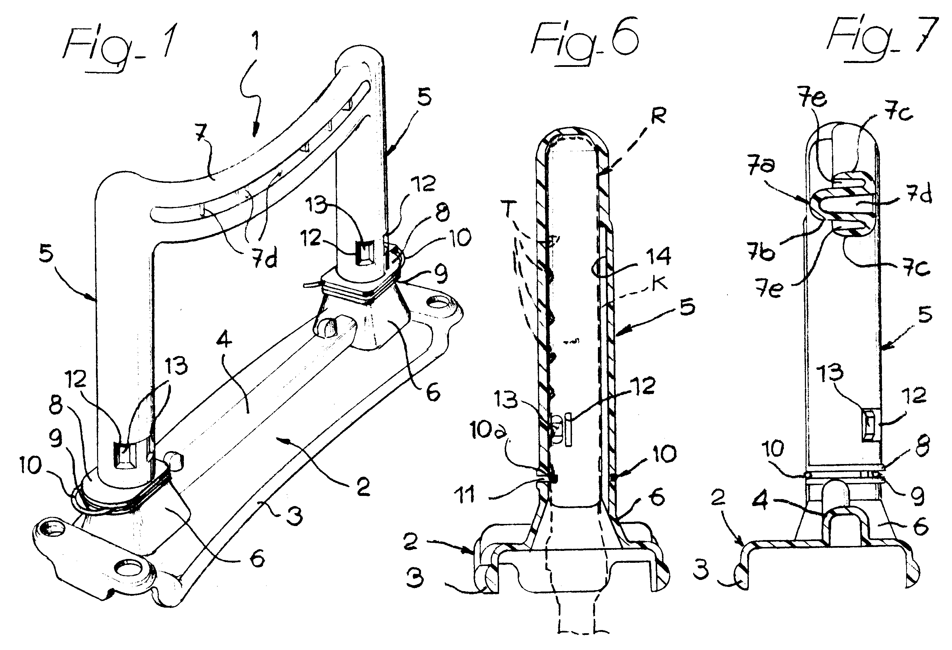

- figure 1 is a diagrammatic perspective view of a headrest frame according to the invention,

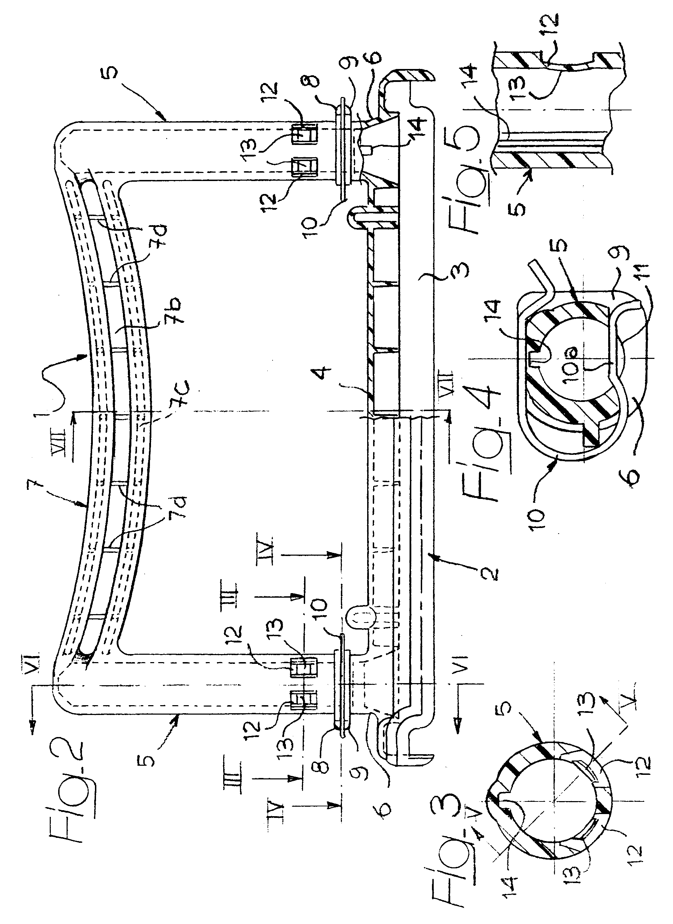

- figure 2 is a front elevetional view in an enlarged scale of figure 1,
- figure 3 is a cross sectioned view in an enlarged scale along line III-III of figure 2,
- figure 4 is a cross section view in an enlarged scale along line IV-IV of figure 2,
- figure 5 is a longitudinal section along line V-V of figure 3,
- figure 6 is a vertical section along line VI-VI of figure 2, and
- figure 7 is a vertical section along line VII-VII of figure 2.

Referring to the drawings, reference numeral 1 generally designates as a whole a frame according to the invention for motor-vehicle seat headrests, constituted by a one-piece body of moulded plastic material having a generally quadrangular annular shape.

The frame 1 comprises a base 2, having a lower bent edge 3 for the snap connection of an upholstery plate, not shown, and formed superiorly with a longitudinal stiffening rib 4, and two lateral tubular uprights 5 extending from corresponding enlarged end portions 6 of the rib 4, perpendicularly to the base 2.

The top ends of the two tubular uprights 5 are connected by a joining cross piece 7, having an arcuate shape with its convexity facing towards the base 2. Moreover, as shown in detail in figure 7, the cross piece 7 is formed with a cross section 7a substantially shaped as a horizontal omega, i.e. with a central part 7b in the form of elongated C and two outer wings 7c bent parallel to the branches of the central part 7b. Stiffening baffles 7d and 7e are interposed between the branches of the central part 7b and between such branches and the bent wings 7c.

Above the enlarged end portions 6, i.e. in correspondence of the lower ends of the two tubular uprights 5, two pairs of parallel flat flanges 8, 9 are integrally formed, between which respective wire springs 10 are fitted, shown in better detail in figure 4 and each of which is formed with a branch 10a projecting through a slit 11 into the cavity of the respective tubular upright 5.

Above the flat flange 8, each tubular upright 5 is provided with a pair of openings 12 across each of which an integral arcuate resilient bridge 13 spans, extending parallel to the axial direction of the tubular upright 5 and protruding within the cavity thereof, as shown in detail in figure 5.

The two resilient bridges 13 of each tubular upright 5 are placed on simmetrically opposed sides relative to a longitudinal key groove 14 formed along the inner wall of the upright 5.

In use, the frame 1 is embodied in a known way within a headrest cushion, normally of foamed plastic material, and respective support rods for the headrest, one of which is diagrammatically depicted as R in figure 6, are inserted within the two tubular uprights 5. The frame 1 is slidable in a known way relative to the rods R for the vertical adjustment of the headrest, and can be positioned in a plurality of adjustment positions, even in a known way, defined by the engagement of the branches 10a of the springs 10 into corresponding notches T formed on the support rods R.

The resilient bridges 13 perform a frictional contact between the tubular uprights 5 and the support rods R, therefore preventing vibrations of the frame 1 and thus of the whole headrest both in the radial and in the axial direction. Any possible vibrations in angular direction are effectively prevented by the engagement of corresponding key appendages K of the two support rods R within the respective key grooves 14 of the two tubular uprights 5.

Naturally the details of construction and the embodiments may be widely varied with respect to what has been disclosed and illustrated, without thereby departing from the scope of the present invention such as defined in the appended claims.

## Claims

1. Headrest frame for motor-vehicle seats comprising a substantially quadrangular annular body (1) made in one piece of moulded plastic material with a base (2) and two lateral tubular uprights (5) adapted to slidably receive therein two support rods (R) of the headrest having respective key appendages (K), wherein a respective elastic stop member (10) is associated with each tubular upright (5) for the adjustable positioning of the frame (1) relative to the support rods (R), and wherein each tubular upright (5) is formed on the inner wall thereof with at least one integral resilient projection (13), characterized in that each tubular upright (5) is provided with a pair of said integral resilient projections (13) angularly offset from each other of about 90°, each integral resilient projection being constituted by a substantially arcuate bridge (13) extending parallel to the axial direction of the tubular upright (5) across an opening (12) of the wall thereof, and each tubular upright (5) being further provided with a key groove (14) for engagement by the corresponding key appendage (K) of the respective support rod (R).

2. Headrest frame according to claim 1, characterized in that said integral resilient projections (13) are placed on simmetrically opposed sides relative to a longitudinal key groove (14) formed along the inner wall of the respective tubular upright (5).

3. Headrest frame according to claim 1 or 2, characterized in that said integral resilient projections (13) are adjacent to the said elastic stop member (10).

4. Headrest frame according to any of the preceding claims, characterized in that the two tubular uprights (5) are connected to each other, at the respective ends thereof opposite to the base (2) of the frame (1), by an arcuate crosspiece (7) having its convexity facing towards the said base (2).

5. Headrest frame according to claim 4, characterized in that the said crosspiece (7) has a substantially omega-shaped (7b, 7c) cross section (7a).

6. Headrest according to the preceding claims, characterized in that said base (2), said tubular uprights (5) and said crosspiece (7) have rounded outer surfaces.

## Patentansprüche

1. Rahmen für eine Kopfstütze für einen Kraftfahrzeugsitz mit einem im wesentlichen rechteckförmigen, einstückigen ringförmigen Körper (1) aus spritzgegossenem Kunststoffmaterial mit einer Basis (2) und zwei seitlichen, rohrförmigen Ständern (5), die so ausgebildet sind, daß sie in sich zwei Stützstäbe (R) der Kopfstütze verschieblich aufnehmen können, die entsprechende Keilvorsprünge (K) aufweisen, wobei ein entsprechendes elastisches Halteelement (10) mit jedem rohrförmigen Ständer (5) zur einstellbaren Position des Rahmens (1) relativ zu den Stützstäben (R) verbunden ist, und wobei jeder rohrförmige Ständer (5) an seiner Innenwand mit wenigstens einem integralen nachgiebigen Vorsprung (13) ausgebildet ist, **dadurch gekennzeichnet**, daß jeder rohrförmige Ständer (5) mit zwei derartigen integralen nachgiebigen Vorsprüngen (13) versehen ist, die um einen Winkel von etwa 90° zueinander versetzt sind, und jeder integrale Vorsprung von einer im wesentlichen gebogenen Brücke (13) gebildet wird, die sich parallel zur axialen Richtung des rohrförmigen Ständers (5) über eine Öffnung (12) in dessen Wandung erstreckt, und jeder rohrförmige Ständer (5) außerdem mit einer Keilnut (14) zur Verbindung mit dem jeweiligen Keilvorsprung (K) des jeweiligen Stützstabes (R) versehen ist.

2. Rahmen für eine Kopfstütze nach Anspruch 1, dadurch gekennzeichnet, daß die integralen, nachgiebigen Vorsprünge (13) an symmetrisch einander gegenüberliegenden Seiten relativ zu einer Längskeilnut (14) vorgesehen sind, die entlang der Innenseite des betreffenden rohrförmigen Ständers (5) vorgesehen ist.

3. Rahmen für eine Kopfstütze nach Anspruch 1 oder 2, dadurch gekennzeichnet, daß die integralen, nachgiebigen Vorsprünge (13) benachbart zu den elastischen Halteelementen (10) liegen.

4. Rahmen für eine Kopfstütze nach einem der vorhergehenden Ansprüche, dadurch gekennzeichnet, daß die beiden rohrförmigen Ständer (5) an den jeweiligen der Basis (2) des Rahmens (1) gegenüberliegenden Enden über ein gebogenes Querstück (7) dessen konvexe Seite in Richtung der Basis (2) zeigt, miteinander verbunden sind.

5. Rahmen für eine Kopfstütze nach Anspruch 4, dadurch gekennzeichnet, daß das Querstück (7) einen im wesentlichen omegaförmigen (7b, 7c) Querschnitt (7a) aufweist.

6. Rahmen für eine Kopfstütze nach einem der vorhergehenden Ansprüche, dadurch gekennzeichnet, daß die Basis (2), die rohrförmigen Ständer (5) und das Querstück (7) abgerundete Oberflächen aufweisen.

## Revendications

1. Armature d'appui-tête pour des sièges de véhicules automobiles, comprenant un corps annulaire sensiblement carré (1) réalisé d'une seule pièce en matière plastique moulée, avec une base (2) et deux montants tubulaires latéraux (5) adaptés à recevoir à l'intérieur en coulissement deux tiges de support (R) de l'appui-tête, qui comportent des prolongements de clavette respectifs (K), dans laquelle un élément d'arrêt élastique respectif (10) est associé à chaque montant tubulaire (5) pour le positionnement réglable de l'armature (1) par rapport aux tiges de support (R), et dans laquelle chaque montant tubulaire (5) est formé sur sa paroi intérieure avec au moins une projection élastique intégrée (13), caractérisée en ce que chaque montant tubulaire (5) est pourvu d'une paire desdites projections élastiques intégrées (13) angulairement décalées l'une de l'autre d'environ 90°, chaque projection élastique intégrée étant constituée par un pontet sensiblement cintré (13) qui s'étend parallèlement à la direction axiale du montant tubulaire (5) à travers une ouverture (12) de la paroi de celui-ci, et en ce que chaque montant tubulaire (5) est en outre pourvu d'une rainure de clavette (14) pour l'engagement par le prolongement de clavette correspondant (K) de la tige de support respective (R).

2. Armature d'appui-tête selon la revendication 1, caractérisée en ce que lesdites projections élastiques intégrées (13) sont placées sur des côtés symétriquement opposés par rapport à une rainure de clavette longitudinale (14) formée le long de la paroi intérieure du montant tubulaire respectif (5).

3. Armature d'appui-tête selon l'une ou l'autre des revendications 1 et 2, caractérisée en ce que lesdites projections élastiques intégrées (13) sont adjacentes audit élément d'arrêt élastique (10).

4. Armature d'appui-tête selon l'une quelconque des revendications précédentes, caractérisée en ce que les deux montants tubulaires (5) sont connectés l'un à l'autre, au niveau de leurs extrémités respectives à l'opposé de la base (2) de l'armature (1), par une traverse cintrée (7) dont la convexité fait face vers ladite base (2).

5. Armature d'appui-tête selon la revendication (4), caractérisée en ce que ladite traverse (7) a une section transversale (7a) sensiblement en forme d'oméga (7b, 7c).

6. Appui-tête selon les revendications précédentes, caractérisé en ce que ladite base (2), lesdits montants tubulaires (5) et ladite traverse (7) ont des surfaces extérieures arrondies.
